# EUROPÄISCHE PATENTSCHRIFT

(11) **EP 2 176 940 B1**
(45) Veröffentlichungstag und Bekanntmachung des Hinweises auf die Patenterteilung: **29.12.2010**
(21) Anmeldenummer: 08774715.0
(22) Anmeldetag: 03.07.2008
(51) Int. Cl.: H02K 1/14

(54) **STATOR FÜR EINEN ELEKTROMOTOR**
STATOR FOR AN ELECTRIC MOTOR
STATOR POUR MOTEUR ÉLECTRIQUE

(30) Priorität: 02.08.2007 EP 07113728
(43) Veröffentlichungstag der Anmeldung: 21.04.2010
(73) Patentinhaber: ETA SA Manufacture Horlogère Suisse, 2540 Grenchen (CH)
(72) Erfinder: DREISBACH, Olaf, CH-3315 Bätterkinden (CH)
(74) Vertreter: Surmely, Gérard
(86) Internationale Anmeldenummer: PCT/EP2008/058603
(87) Internationale Veröffentlichungsnummer: WO 2009/015982

(56) Entgegenhaltungen:
- EP-A- 1 571 749
- DE-A1- 1 942 765
- DE-A1- 19 747 664
- GB-A- 2 054 978

## Beschreibung

Die Erfindung betrifft einen Stator für einen Elektromotor nach dem Oberbegriff des Patentanspruchs 1. Sie betrifft weiterhin ein Verfahren zur Herstellung des Stators sowie einen diesen Stator aufweisenden Elektromotor.

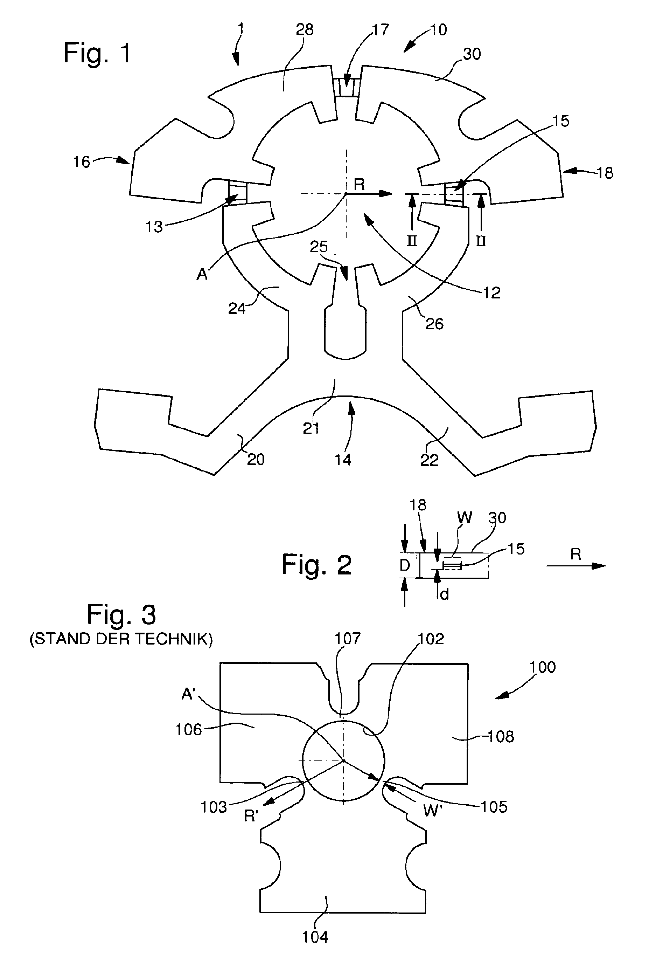

Ein gattungsgemässer Stator ist allgemein bekannt und in Fig. 3 ausschnittsweise dargestellt. Dieser bekannte Stator 100 weist drei ein Statorloch 102 umgebende Statorteile 104, 106, 108 auf, die untereinander über Stege 103, 105, 107 miteinander verbunden sind. Die Stege 103, 105, 107 sind in Radialrichtung R' zur Achse A' des Statorlochs 102 dünnwandig ausgebildet und weisen in Axialrichtung die gleiche Dicke auf wie die Statorteile 104, 106, 108.

Die Stege 103, 105, 107 bilden isthmusartige Verbindungsabschnitte zwischen den Statorteilen 104, 106, 108 und gewährleisten eine definierte Ausrichtung der Statorteile zueinander, sodass gewährleistet ist, dass das Statorloch 102, in welchem der Rotor läuft, exakt kreisrund ist.

Diese aus mechanischen Gründen vorgesehene Verbindung der Statorteile 104, 106, 108 miteinander besitzt jedoch den Nachteil, dass die Wandstärke W der Stege 103, 105, 107 aus technischen Gründen (insbesondere wegen des Verarbeitungsverfahrens) nicht beliebig verkleinerbar ist, und dadurch ein Rest-Magnetfluss zwischen den Statorteilen 104, 106, 108 übertragen wird. Insbesondere wenn ein mit einem derartigen Stator versehener Elektromotor als Schrittmotor ausgebildet ist, kann diese Übertragung des Rest-Magnetflusses zwischen den Statorteilen so hoch sein, dass die Effizienz und die Genauigkeit des Schrittmotors beeinträchtigt werden.

EP 1571749 offenbart einen Stator mit zwei Statorteilen.

Aufgabe der vorliegenden Erfindung ist es, einen gattungsgemässen Stator anzugeben, bei dem die Übertragung des Magnetflusses zwischen den Statorteilen deutlich herabgesetzt ist und der einfach und kostengünstig herstellbar ist.

Diese Aufgabe wird durch das im kennzeichnenden Teil des Patentanspruchs 1 angegebene Merkmal gelöst.

Die Verringerung der Dicke der Verbindungsabschnitte in Axialrichtung erlaubt eine Reduzierung des Querschnittes der Verbindungsabschnitte mit einem effizienten und technisch einfachen Verfahren, insbesondere durch Prägen. Es ist so möglich, sehr dünne Verbindungsabschnitte herzustellen. Damit senkt man auf wirkungsvolle Weise die Übertragung des Magnetflusses zwischen den Statorteilen gegenüber der bisherigen Verfahrensweise.

Wenn man in vorteilhafter Weiterbildung der Erfindung die Verbindungsabschnitte zusätzlich auch in radialer Richtung verkleinert, wird der Querschnitt der Verbindungsabschnitte noch weiter reduziert, und die Übertragung des Magnetflusses wird noch weiter herabgesetzt.

Vorteilhafte Weiterbildungen der Erfindung sind in den Unteransprüchen angegeben.

Bevorzugt ist der Stator aus drei Statorteilen gebildet, die über insgesamt drei isthmusartige Verbindungsabschnitte miteinander verbunden sind.

Insbesondere vorteilhaft ist es, wenn die isthmusartigen Verbindungsabschnitte einstückig mit den Statorteilen ausgebildet sind und so einen integralen Statorkörper des Stators bilden. Diese einstückige Ausgestaltung des Stators reduziert die Herstellungskosten deutlich.

Ein Verfahren zur Herstellung eines Stators gemäss der Erfindung zeichnet sich durch die Schritte aus:
a) Bereitstellen eines Statorblechs;
b) Erzeugen der Kontur des Statorkörpers (10) einschliessllich der die einzelnen Statorteile (14, 16, 18) miteinander verbindenden Verbindungsabschnitte (13, 15, 17), wobei die Dicke der Verbindungsabschnitte (13, 15, 17) in Axialrichtung verringert ist, um Isthmen zwischen den angrenzenden Statorteilen zu erzeugen.

Dieses erfindungsgemässe Verfahren ist geeignet, um auf besonders wirtschaftliche Weise eine grosse Stückzahl von erfindungsgemässen Statoren in kurzer Zeit kostengünstig herzustellen. Dabei ist zu beachten, dass es sich bei den mit diesen Statoren ausgestatteten Elektromotoren um Produkte einer Massenfertigung von mehreren hunderttausend Stück pro Tag handelt.

Dabei wird der Schritt b) vorteilhafterweise in drei Teilschritte unterteilt:
b1) Einbringen von Löchern in das Statorblech an Orten, die die radialen Begrenzungen der Verbindungsabschnitte bestimmen;
b2) Verringern der Dicke des Statorblechs am Ort der Verbindungsabschnitte (13, 15, 17) in Axialrichtung, um die Isthmen zwischen den angrenzenden Statorteilen zu erzeugen; und
b3) Freistellen der Kontur des Statorkörpers (10) einschliessllich der die einzelnen Statorteile (14, 16, 18) miteinander verbindenden Verbindungsabschnitte (13, 15, 17) durch spanlose Fertigung.

Besonders vorteilhaft ist dabei, wenn der Schritt des Freistellens der Kontur des Statorkörpers durch Ausstanzen oder beispielsweise durch Schneiden mittels eines hochenergetischen Strahls aus dem bereitgestellten Statorblech erfolgt.

Vorzugsweise erfolgt der Schritt des Verringerns der Dicke der isthmusartigen Verbindungsabschnitte in Axialrichtung durch Materialverformung, insbesondere durch Prägen. Zusätzlich hat die Materialverformung einen positiven Effekt auf die Erhöhung des magnetischen Widerstandes in diesem Bereich.

Ein derartiger Materialverformungsschritt kann beispielsweise während des Ausstanzens der Kontur des Stators erfolgen, wodurch der Stator in einem Arbeitsgang hergestellt werden kann.

Eine bevorzugte Anwendung des erfindungsgemässen Stators erfolgt in einem Elektromotor mit einem solchen Stator, einem den Stator aufnehmenden Motorgehäuse sowie einem in das Statorloch eingesetzten und im Motorgehäuse drehbar gelagerten Rotor.

Selbstverständlich ist der Stator in einem derartigen Elektromotor auf herkömmliche Weise mit elektrischen Wicklungen versehen, die auf den jeweiligen Statorabschnitten angebracht sind.

Die Erfindung wird nachfolgend anhand eines Beispiels unter Bezugnahme auf die Zeichnung näher erläutert; in dieser zeigt:
- Fig. 1: einen Grundriss eines erfindungsgemässen Stators;
- Fig. 2: einen Schnitt in Radialrichtung durch einen Verbindungsabschnitt entlang der Linie II-II in Fig. 1; und
- Fig. 3: einen Stator gemäss dem Stand der Technik.

Fig. 1 zeigt den Körper 10 eines Stators 1 im Grundriss. Zum besseren Verständnis der Erfindung sind die elektrischen Wicklungen des Stators nicht gezeigt. Der Statorkörper ist aus einem Statorblech aus einer Legierung aus Eisen und Silizium (FeSi) oder einer Legierung aus Eisen und Nickel (FeNi) gefertigt.

Der Statorkörper 10 weist ein Statorloch 12 auf, das zur Aufnahme eines (nicht gezeigten) Rotors ausgebildet ist, sodass Rotor und Stator zusammen mit einem (nicht gezeigten) Motorgehäuse einen Elektromotor bilden.

Der Statorkörper 10 besteht aus drei Statorteilen 14, 16, 18, die das Statorloch 12 umgeben. Der untere Statorteil 14 weist zwei sich schräg nach unten erstreckende Arme 20, 22 auf, die im Mittelbereich über einen Mittelabschnitt 21 miteinander verbunden sind. Auf dem ersten Arm 20 ist im Bereich des Mittelabschnitts 21 ein erster kreisbogenförmig gekrümmter Spulenaufnahmeabschnitt 24 vorgesehen, der innerhalb eines ersten Quadranten des kreisförmigen Statorlochs 12 liegt. Auf dem zweiten Arm 22 ist im Bereich des Mittelabschnitts 21 ein zweiter kreisbogenförmig gekrümmter Spulenaufnahmeabschnitt 26 vorgesehen, der innerhalb eines zweiten Quadranten des kreisförmigen Statorlochs 12 liegt.

Vom jeweiligen oberen, freien Ende des ersten beziehungsweise des zweiten Spulenaufnahmeabschnitts 24, 26 erstreckt sich ein erster Verbindungsabschnitt 13 beziehungsweise ein zweiter Verbindungsabschnitt 15 zu einem oberhalb des ersten Statorteils 14 gelegenen zweiten Statorteil 16 beziehungsweise dritten Statorteil 18. Das zweite Statorteil 16 und das dritte Statorteil 18 sind an ihrem jeweiligen freien Ende über einen dritten Verbindungsabschnitt 17 miteinander verbunden.

Sowohl der zweite Statorteil 16, als auch der dritte Statorteil 18 weisen jeweils einen Spulenaufnahmeabschnitt 28 beziehungsweise 30 auf, die jeweils in einem dritten beziehungsweise vierten Quadranten des Statorlochs 12 gelegen sind. Auf diese Weise umgeben der erste Spulenaufnahmeabschnitt 24 und der zweite Spulenaufnahmeabschnitt 26 des ersten Statorteils 14 zusammen mit dem am zweiten Statorteil 16 vorgesehenen dritten Spulenaufnahmeabschnitt 28 und dem am dritten Statorteil 18 vorgesehenen vierten Spulenaufnahmeabschnitt 30 das Statorloch 12.

Während die beiden Spulenaufnahmeabschnitts 24 und 26 des ersten Statorteils in Umfangsrichtung um die Achse A des Statorlochs 12 voneinander beabstandet sind und zwischen sich einen Freiraum 25 ausbilden, ist zwischen dem ersten Spulenaufnahmeabschnitt 24 und dem dritten Spulenaufnahmeabschnitt 28 sowie zwischen dem zweiten Spulenaufnahmeabschnitt 26 und dem vierten Spulenaufnahmeabschnitt 30 und zwischen dem dritten Spulenaufnahmeabschnitt 28 und dem vierten Spulenaufnahmeabschnitt 30 zwar auch in Umfangsrichtung jeweils ein Zwischenraum ausgebildet, der durch die Verbindungsabschnitte 13, 15 beziehungsweise 17 überbrückt wird. Damit der magnetische Fluss in Umfangsrichtung zwischen den jeweiligen Spulenaufnahmeabschnitten in gewünschter Weise unterbrochen ist, sind die Verbindungsabschnitte 13, 15, 17 in Radialrichtung R schmaler ausgebildet als die jeweils benachbarten Spulenaufnahmeabschnitte 24, 26, 28, 30.

Des weiteren sind die Verbindungsabschnitte 13, 15, 17 auch in Richtung der Achse A dünner ausgebildet als die jeweils benachbarten Spulenaufnahmeabschnitte 24, 26, 28, 30. In Fig. 2 ist deutlich zu erkennen, dass die Wandstärke W des Verbindungsabschnitts 15 in Radialrichtung R wesentlich geringer ist, als die Radialerstreckung des jeweiligen Spulenaufnahmeabschnitts in diesem Bereich. Weiterhin ist in Fig. 2 zu erkennen, dass die Dicke d (z. B. 0,1 mm) des Verbindungsabschnitts 17 im Bereich von 5 mal bis 20 mal geringer ist als die Dicke D (z. B. 1 mm) des benachbarten Spulenaufnahmeabschnitts 30. Zwar ist in Fig. 2 nur der Verbindungsabschnitt 17 dargestellt, doch sind die Verbindungsabschnitte 13 und 15 in der gleichen Weise ausgebildet.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemässe Vorrichtung vielmehr auch andere als die oben beschriebenen Ausgestaltungsformen annehmen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Stator für einen Elektromotor, insbesondere für einen Schrittmotor, mit zumindest zwei Statorteilen (14, 16, 18), die gemeinsam ein Statorloch (12) umgeben, wobei die einzelnen Statorteile (14, 16, 18) miteinander verbunden sind, wobei zur Verbindung der Statorteile (14, 16, 18) Verbindungsabschnitte vorgesehen sind,
**dadurch gekennzeichnet, dass** die Verbindungsabschnitte (13, 15, 17) in axialer Richtung, parallel zur Achse (A) des Statorlochs (12), gegenüber den benachbarten Abschnitten der angrenzenden Statorteile (14, 16, 18) verjüngt ausgebildet sind und Isthmen zwischen den angrenzenden Statorteilen bilden.

2. Stator nach Anspruch 1,
**dadurch gekennzeichnet, dass** die isthmusartig ausgestalteten Verbindungsabschnitte (13, 15, 17) auch in radialer Richtung zur Achse (A) des Statorlochs (12) gegenüber den benachbarten Abschnitten der angrenzenden Statorteile (14, 16, 18) verjüngt ausgebildet sind.

3. Stator nach Anspruch 1 oder 2,
**dadurch gekennzeichnet, dass** der Stator (1) drei Statorteile (14, 16, 18) aufweist, die über insgesamt drei isthmusartige Verbindungsabschnitte (13, 15, 17) miteinander verbunden sind.

4. Stator nach einem der Ansprüche 1 bis 3,
**dadurch gekennzeichnet, dass** die isthmusartigen Verbindungsabschnitte (13, 15, 17) einstückig mit den Statorteilen (14, 16, 18) ausgebildet sind und so einen integralen Statorkörper (10) des Stators 1 bilden.

5. Verfahren zur Herstellung eines Stators mit den Merkmalen gemäss einem der Patentansprüche 1 bis 4,
**gekennzeichnet durch** die Schritte:
a) Bereitstellen eines Statorblechs;
b) Erzeugen der Kontur des Statorkörpers (10) einschliessllich der die einzelnen Statorteile (14, 16, 18) miteinander verbindenden Verbindungsabschnitte (13, 15, 17), wobei die Dicke der Verbindungsabschnitte (13, 15, 17) in Axialrichtung verringert ist, um Isthmen zwischen den angrenzenden Statorteilen zu erzeugen.

6. Verfahren nach Anspruch 5,
**dadurch gekennzeichnet, dass** der Schritt b) des Erzeugens der Kontur des Statorkörpers (10) in folgenden Teilschritten abläuft:
b1) Einbringen von Löchern in das Statorblech an Orten, die die radialen Begrenzungen der Verbindungsabschnitte bestimmen;
b2) Verringern der Dicke des Statorblechs am Ort der Verbindungsabschnitte (13, 15, 17) in Axialrichtung, um den Isthmus zwischen den angrenzenden Statorteilen zu erzeugen; und
b3) Freistellen der Kontur des Statorkörpers (10) einschliesslich der die einzelnen Statorteile (14, 16, 18) miteinander verbindenden Verbindungsabschnitte (13, 15, 17) durch spanlose Fertigung.

7. Verfahren nach Anspruch 6,
**dadurch gekennzeichnet, dass** der Schritt b2) des Verringerns der Dicke der Verbindungsabschnitte (13, 15, 17) in Axialrichtung durch Materialverformung, insbesondere durch Prägen, erfolgt.

8. Verfahren nach Anspruch 6 oder 7,
**dadurch gekennzeichnet, dass** der Schritt b3) des Freistellens der Kontur des Statorkörpers (10) durch Ausstanzen aus dem in Schritt a) bereitgestellten Statorblech erfolgt.

9. Elektromotor mit einem Stator gemäss einem der Ansprüche 1 bis 4, einem den Stator (1) aufnehmenden Motorgehäuse sowie einem in das Statorloch (12) eingesetzten und im Motorgehäuse drehbar gelagerten Rotor.

## Claims

1. Stator for an electric motor, in particular for a stepping motor, with at least two stator parts (14, 16, 18), which jointly surround a stator hole (12), wherein the individual stator parts (14, 16, 18) are connected to one another, wherein connecting sections are provided for connection of the stator parts (14, 16, 18), **characterised in that** the connecting sections (13, 15, 17) are tapered in axial direction parallel to the axis (A) of the stator hole (12) relative to the adjacent sections of the adjoining stator parts (14, 16, 18) and form isthmuses between the adjoining stator parts.

2. Stator according to claim 1, **characterised in that** the isthmus-like connecting sections (13, 15, 17) are also tapered in radial direction to the axis (A) of the stator hole (12) relative to the adjacent sections of the adjoining stator parts (14, 16, 18).

3. Stator according to claim 1 or 2, **characterised in that** the stator (1) has three stator parts (14, 16, 18), which are connected to one another via a total of three isthmus-like connecting sections (13, 15, 17).

4. Stator according to one of claims 1 to 3, **characterised in that** the isthmus-like connecting sections (13, 15, 17) are configured in one piece with the stator parts (14, 16, 18) and thus form an integral stator body (10) of the stator (1).

5. Process for the production of a stator with the features of one of claims 1 to 4, **characterised by** the steps:
a) providing a stator sheet;
b) generating the contour of the stator body (10) including the connecting sections (13, 15, 17) connecting individual stator parts (14, 16, 18) to one another, wherein the thickness of the connecting sections (13, 15, 17) is reduced in axial direction in order to generate isthmuses between the adjoining stator parts.

6. Process according to claim 5, **characterised in that** step b) for generating the contour of the stator body (10) is divided into the following component steps:
b1) making holes in the stator sheet at locations that determine the radial boundaries of the connecting sections;
b2) reducing the thickness of the stator sheet at the location of the connecting sections (13, 15, 17) in axial direction in order to generate the isthmuses between the adjoining stator parts; and
b3) releasing the contour of the stator body (10) including the connecting sections (13, 15, 17) connecting the individual stator parts (14, 16, 18) to one another by working without cutting.

7. Process according to claim 6, **characterised in that** step b2) for reducing the thickness of the connecting sections (13, 15, 17) in axial direction is performed by material forming, in particular by stamping.

8. Process according to claim 6 or 7, **characterised in that** step b3) for releasing the contour of the stator body (10) is performed by stamping it out of the stator sheet provided in step a).

9. Electric motor with a stator according to one of claims 1 to 4, a motor housing accommodating the stator (1) and a rotor inserted into the stator hole (12) and rotatably mounted in the motor housing.

## Revendications

1. Stator pour un moteur électrique, en particulier pour un moteur pas-à-pas, avec au moins deux parties de stator (14, 16, 18), qui entourent conjointement un trou de stator (12), les parties individuelles du stator (14, 16, 18) étant reliées les unes aux autres, et des sections de raccordement étant fournies pour raccorder les parties de stator (14, 16, 18), **caractérisé en ce que** les sections de raccordement (13, 15, 17) sont effilées dans une direction axiale parallèle à l'axe (A) du trou du stator (12) envers les sections adjacentes des parties du stator (14, 16, 18) avoisinantes, et forment des isthmes entre les parties de stator avoisinantes.

2. Stator selon la revendication 1, **caractérisé en ce que** les sections de raccordement (13, 15, 17) agencées en forme d'isthme sont aussi effilées dans une direction radiale par rapport à l'axe (A) du trou du stator (12) envers les sections adjacentes des parties du stator (14, 16, 18) avoisinantes.

3. Stator selon l'une des revendications 1 ou 2, **caractérisé en ce que** le stator (1) a trois parties de stator (14, 16, 18), qui sont raccordées entre elles par l'intermédiaire d'un total de trois sections de raccordement en forme d'isthme (13, 15, 17).

4. Stator selon l'une des revendications 1 à 3, **caractérisé en ce que** les sections de raccordement en forme d'isthme (13, 15, 17) sont agencées en tant qu'une seule pièce avec les parties du stator (14, 16, 18) et forment ainsi un corps de stator (10) monobloc avec le stator (1).

5. Méthode pour la production d'un stator ayant les caractéristiques de l'une des revendications 1 à 4, **caractérisé par** les étapes suivantes:
a) se munir d'une tôle de stator;
b) façonner le contour du corps de stator (10), incluant les sections de raccordement (13, 15, 17) raccordant les parties individuelles du stator (14, 16, 18) entre elles, l'épaisseur des sections de raccordement (13, 15, 17) étant réduite en direction axiale afin de générer des isthmes entre les parties adjacentes du stator.

6. Méthode selon la revendication 5, **caractérisée en ce que** l'étape b) de génération du contour du corps de stator (10) est divisée en les sous-étapes suivantes:
b1) perçage de trous dans la tôle de stator aux endroits locations qui déterminent les limites radiales des sections de raccordement;
b2) réduction de l'épaisseur de la tôle de stator au niveau des sections de raccordement (13, 15, 17) en direction axiale afin de former les isthmes entre les parties de stator adjacentes; et
b3) libération du contour du corps du stator (10) incluant les sections de raccordement (13, 15, 17) raccordant les parties individuelles du stator (14, 16, 18) entre elles avec une finition sans enlèvement de copeaux.

7. Méthode selon la revendication 5, **caractérisée en ce que** l'étape b2) de réduction des sections de raccordement (13, 15, 17) en direction axiale est effectuée par déformation de matière, en particulier par étampage.

8. Méthode selon la revendication 6 ou 7, **caractérisée en ce que** l'étape b3) de libération du contour du corps du stator (10) est effectuée par découpage de la tôle de stator fournie à l'étape a).

9. Moteur électrique avec un stator selon l'une des revendications 1 à 4, un boîtier de moteur logeant le stator (1) ainsi qu'un rotor inséré dans le trou du stator (12) et monté de façon pivotante dans le boîtier du moteur.
